# EUROPEAN PATENT APPLICATION

(11) **EP 4 725 598 A1**
(43) Date of publication of application: **15.04.2026**
(21) Application number: 25172345.8
(22) Date of filing: 24.04.2025
(51) Int. Cl.: B01J 35/39, F02B 47/04, F02B 51/02, F02D 41/00, B01J 21/06, B01J 23/30, B01J 37/34, B01J 37/03, B01J 35/23, B01D 53/94, B01J 35/45, B01J 37/16, B01J 23/42, B01J 23/50, B01J 23/66, A61L 9/20

(54) **PHOTOCATALYTIC LIQUID AND METHOD FOR MANUFACTURING THE SAME**

(30) Priority: 14.10.2024 TW 113139009
(71) Applicant: Hao Wei Environmental Technology Co., Ltd., 100009 Taipei City (TW)
(72) Inventor: HO, Chao-Wei, Taipei City (TW)
(74) Representative: Bittner, Thomas L.

(57) **Abstract**

A photocatalytic liquid is disclosed. The photocatalytic liquid includes a noble metal nanoparticle being in a weight percentage of 0.01-0.2 wt.% of the photocatalytic liquid, and including a silver nanoparticle; a photocatalytic nanomaterial being in a weight percentage of 0.01-25 wt.% of the photocatalytic liquid, and including at least one of a titanium nanoparticle and a tungsten trioxide nanoparticle; a dispersant in a weight percentage of 0.01-5 wt.% of the photocatalytic liquid; and a balance of a solvent.

## Description

This application claims the benefit of the Taiwan Patent Application No. 113139009 filed on October 14, 2024 at the Taiwan Intellectual Property Office, the disclosures of which are incorporated herein in their entirety by reference.

### Field

The present invention relates to a photocatalytic liquid and a method for manufacturing the same, and more particularly to a photocatalytic liquid comprising a nano scale noble metal and a dispersant, and a method for manufacturing the same.

### Background

A photocatalyst is a catalyst that uses light energy to carry out a catalytic reaction. That is, under the irradiation of light, it converts light energy into chemical energy, thereby promoting the oxidation or reduction reaction of organic matter to achieve a synthesis or decomposition reaction. For example, titanium dioxide (TiO₂) can decompose water molecules to produce oxygen and hydrogen under ultraviolet light, so titanium dioxide can be considered as a photocatalytic material.

The study found that, when titanium dioxide is irradiated with light that is higher than the energy gap of titanium dioxide, electrons will jump from the covalency band to the conduction band, thus generating electron-hole pairs. The oxidized holes react with the hydroxyl groups (OH-) on the surface of titanium dioxide to generate highly oxidizing hydroxyl radicals (·OH), while the reduced electrons combine with oxygen molecules to form superoxide ions (·O₂⁻). The active hydroxyl radicals and superoxide radicals can decompose organic matter into carbon dioxide and water, thus achieving a purification effect. In terms of a light source, the energy gap of titanium dioxide is about 3.2 electron volts (eV), which is equivalent to the energy carried by light waves with a wavelength of 387.5 nm. Therefore, in order to excite the electrons of titanium dioxide from the covalent band to the conductive band, ultraviolet light with a wavelength less than 387.5 nm must be provided to enable titanium dioxide to trigger a photocatalytic reaction.

In addition, tungsten trioxide (WO₃) is also a common photocatalytic material. Tungsten trioxide can absorb light with a wavelength below 460 nm. Studies have shown that tungsten trioxide serving as a photocatalytic material has a photocatalytic effect in indoor environments and can purify the indoor environment. For example, photocatalysis occurs under the irradiation of fluorescent lamps with a wavelength of 400 nm.

The internal and external combustion engine is a device that converts the heat energy generated by the combustion of fuel into mechanical energy. The air is delivered into a device from the intake manifold or other pipelines to mix with fuel for combustion, thereby utilizing the increased pressure caused by the thermal expansion of the gas to do work on the driving mechanism. It is worth noting that, when the internal or external combustion engine is working, light, heat, water and carbon dioxide will be generated when the fuel and air in the combustion chamber undergo a combustion reaction. The light generated at this moment includes infrared light, visible light and a little bit of ultraviolet light, and these light sources have not been reused yet. In addition to being used as a combustion promoter for gasoline or diesel, the photocatalytic material of the present invention can also be used as a combustion promoter for fossil fuels (such as gasoline, diesel, natural gas and coal), a biomass fuel (such as biomass pellets or biomass fuel rods made from solid agricultural waste, liquid biogasoline/ethanol gasoline and biodiesel, or gaseous biomethane or biohydrogen fuel), or a regenerated fuel (such as combustible pellets made from plastic or rubber product waste).

The photocatalytic liquid of the present invention can also be applied to heat-insulating materials for green buildings or automotive glass, or functional products used as cooling materials for buildings. The heat-insulating material or cooling material applied on a building or a vehicle includes a photocatalytic nanomaterial, which can be a coating applied on a glass, or a coating applied on a film such as PET material, and then the coated film is adhered to a glass. By utilizing the characteristics of photocatalytic materials, most of the ultraviolet light, infrared light or far infrared light can be blocked, thus providing good heat insulation properties and making the room in the building or the car cooler. Alternatively, the photocatalytic liquid according to the present invention is made into a water-repellent photocatalytic coating that can be coated on the interior or exterior wall of a building. The photocatalytic material can decompose/remove harmful chemicals to remove pollutants such as volatile organic compounds (VOCs) from the indoor or outdoor environment, or prevent them from adhering to the interior or exterior wall. The VOCs may come from exhaust gases emitted by factories or vehicles, or pigments or paints used in building materials. Meanwhile, the photocatalytic material of the present invention has water-repellent/hydrophilic properties. When the water-repellent photocatalytic coating is applied to the exterior wall or roof of a building, if rainwater, water from exterior wall cleaning, water from an artificial water curtain/waterfall, or water from a fountain is sprayed on the exterior wall surface or roof surface, it will spread on the surface to form a continuous water layer instead of water droplets, thereby maximizing the surface area on the building that contacts the water layer. In this way, not only the hydrophilicity of the glass is increased and the visibility/transmittance of the glass is improved, but also, when the water evaporates, the heat originally absorbed by the building and the heat of the ambient air is taken away with evaporated water, and the temperature of the building and the environment is naturally decreased. Similarly, applying the photocatalytic liquid or photocatalytic material of the present invention to a vehicle glass or rearview mirror can also achieve the effect of increasing the temperature drop inside the vehicle and the image clarity in the rearview mirror.

In view of this, there is a need to provide a photocatalytic liquid, a method for manufacturing the photocatalytic liquid, and a combustion-promoting additive containing the photocatalytic liquid, in which the photocatalytic liquid can utilize the light generated by the combustion to improve the efficiency of the combustion, or has the function of removing pollutants and insulating heat from the outdoor environment, or the function of cooling the buildings/vehicles.

Furthermore, because the photocatalytic material in the prior photocatalytic liquid tends to form large particles due to agglomeration and is easy to precipitate, the concentration of the effective photocatalytic material in the photocatalytic liquid gradually decreases, resulting in a lower catalytic efficiency. Although the catalytic efficiency of the photocatalytic liquid may be "relatively" stable in the early stage, however, the catalytic efficiency will gradually decrease over time, resulting in the photocatalytic liquid to have a shortened service life.

In addition, in order to increase the photocatalytic efficiency of the photocatalytic liquid, it is found through careful experiments by the inventor that mixing the photocatalytic liquid with at least one of nano scale noble metals such as silver, platinum, and palladium can really effectively increase the efficiency of the photocatalytic reaction.

Moreover, in order to reduce manufacturing costs, the inventor reduced the weight percentage of noble metals and replaced them with rare earth oxides (such as cerium dioxide and yttrium trioxide) or metal oxides (such as at least one of cuprous oxide, copper peroxide, and manganese dioxide), which can also increase the efficiency of the photocatalytic reaction.

### Summary

Nevertheless, the inventor has discovered through sophisticated experiments that mixing silicon dioxide into the photocatalytic fluid can increase the thermal stability and dispersibility of the photocatalytic material and prevent particle agglomeration, thereby maintaining the nanoscale size of the particles in the liquid.

Therefore, the Applicant has disclosed a photocatalytic liquid and a method for manufacturing the same to improve the problems and reduce the costs of the prior art mentioned above.

In accordance with one aspect of the present invention, a method for manufacturing a photocatalytic liquid is disclosed. The method for manufacturing a photocatalytic liquid includes forming a sol-gel solution containing a titanium or tungsten, wherein: the steps of forming in a first instance of the sol-gel solution containing the titanium comprise: mixing a precursor containing a titanium element and a first solvent to form a first solution; adding a first second solution containing a silicon dioxide into the first solution; and causing the titanium element contained in the precursor and a silicon oxide contained in the first second solution to undergo hydrolysis and reduction reactions to obtain the sol-gel solution containing the titanium at a temperature between 70 to 90°C; and the steps of forming in a second instance of the sol-gel solution containing the tungsten comprise: mixing a precursor containing a tungsten element and a second solvent to form a second solution; adding a hydrogen peroxide solution into the second solution; and causing the tungsten element contained in the precursor and the hydrogen peroxide solution to undergo hydrolysis and reduction reactions to obtain the sol-gel solution containing the tungsten at room temperature; and adding a dispersant and a noble metal salt solution Into one of the sol-gel solution containing the titanium and the sol-gel solution containing the tungsten at 50-70°C to cause a gel included in the sol-gel solution to encompass a noble metal in the noble metal salt solution, thereby obtaining the photocatalytic liquid

In accordance with another aspect of the present invention, a method for manufacturing a photocatalytic liquid is disclosed. The method for manufacturing a photocatalytic liquid includes providing a photocatalytic metal precursor comprising one of a titanium ion, a tungsten ion, and a combination thereof; forming a photocatalytic metal oxide from the photocatalytic metal precursor using one of a sol-gel method and a photo-deposition method; and adding a dispersant and a solvent to disperse the photocatalytic metal oxide in the solvent, so as to obtain the photocatalytic liquid.

In accordance with a further aspect of the present invention, a photocatalytic liquid is disclosed. The photocatalytic liquid includes a noble metal nanoparticle being in a weight percentage of 0.01-0.2 wt.% of the photocatalytic liquid, and including a silver nanoparticle; a photocatalytic nanomaterial being in a weight percentage of 0.01-25 wt.% of the photocatalytic liquid, and including at least one of a titanium nanoparticle and a tungsten trioxide nanoparticle; a dispersant in a weight percentage of 0.01-5 wt.% of the photocatalytic liquid; and a balance of a solvent.

The embodiments are depicted by the examples, and are therefore merely illustrative of inventive concepts.

### Description of embodiments

- Fig. 1: is a flow chart showing a method for manufacturing a photocatalytic liquid according to one embodiment of the present invention.
- Fig. 2: is a flow chart showing a method for manufacturing a photocatalytic liquid using a sol-gel method according to another embodiment of the present invention.
- Fig. 3: is a flow chart showing a method for manufacturing a photocatalytic liquid using a sol-gel method according to another embodiment of the present invention.
- Fig. 4: is a flow chart showing a method for manufacturing a photocatalytic liquid using a sol-gel method according to another embodiment of the present invention.
- Fig. 5: is a flow chart showing a method for manufacturing a photocatalytic metal oxide using a photodeposition method according to another embodiment of the present invention.
- Fig. 6: is a Tauc plot showing the curves of the nano scale noble metal and rare earth composite photocatalyst of the present invention and a conventional photocatalyst.
- Fig. 7: is a SEM photograph showing the particle size of the nanoparticles including the noble metal and rare earth metal composite and the particle sizes of the TiO2 in photocatalytic liquid according to the present invention.

Please refer to all figures of the present invention when reading the following detailed description, wherein all figures of the present invention demonstrate different embodiments of the present invention by showing examples, and help the skilled person in the art to understand how to implement the present invention. The present examples provide sufficient embodiments to demonstrate the concept of the present invention, each embodiment does not conflict with the others, and new embodiments can be implemented through an arbitrary combination thereof; that is, the present invention is not restricted to the embodiments disclosed in the present specification.

Unless other limitations are defined in a specific embodiment, the following definitions apply to the terms used throughout this specification.

The embodiments of the present invention described below are the examples that use a sol-gel method to synthesize a titanium metal or tungsten metal solution, and then further produce therefrom a photocatalytic liquid.

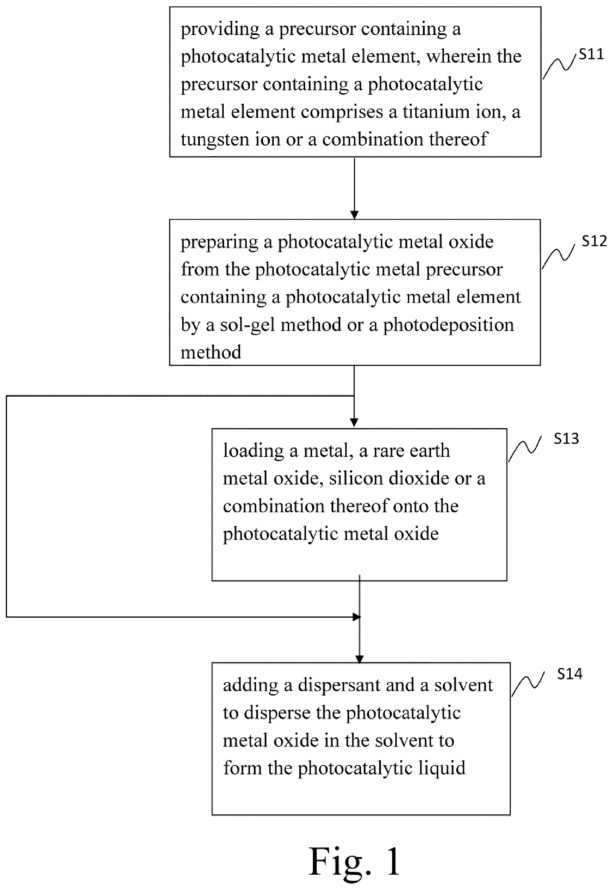

Fig. 1 is a flow chart showing a method for manufacturing a photocatalytic liquid according to one embodiment of the present invention. As shown in Fig. 1, the method comprises the following steps: providing a precursor containing a photocatalytic metal element, wherein the precursor containing a photocatalytic metal element comprises a titanium ion, a tungsten ion or a combination thereof (S11); preparing a photocatalytic metal oxide from the photocatalytic metal precursor containing a photocatalytic metal element by a sol-gel method or a photodeposition method (S12); and adding a dispersant and a solvent to disperse the photocatalytic metal oxide in the solvent to form the photocatalytic liquid (S14). Optionally, before step S14, the method may further include a step: loading a metal, a rare earth metal oxide, silicon dioxide or a combination thereof onto the photocatalytic metal oxide (S13).

The photocatalytic metal oxide is titanium dioxide or tungsten trioxide. The metal is a noble metal (such as silver) or a non-noble metal (such as copper). The rare earth metal oxide is cerium dioxide. The solvent is water or an alcohol (such as ethanol, ethylene glycol, glycerol or isopropyl alcohol). In the photocatalytic liquid according to the present invention, the applicable dispersant is a high molecular weight dispersant. The amount of the high molecular weight dispersant added is about 0.01-5 wt.% of the photocatalytic liquid. The high molecular weight dispersant may further include polycarbonate.

The amount of the dispersant added is about 0.1-5 wt.% of the photocatalytic liquid. The dispersant is selected from a long carbon chain ammonium salt, a long carbon chain oleylamine (OLA), a long carbon chain thiol, a long carbon chain sodium sulfate, a long carbon chain silane, or other high molecular weight dispersants. The average molecular weight of the suitable dispersant is in the range of 200 to 10,000. The long carbon chain ammonium salt is, for example, ammonium polyacrylate (NH₄PAA). The long carbon chain oleylamine (OLA) is C₁₈H₃₅NH₂. The long carbon chain sodium sulfate is sodium dodecyl sulfate (SDS). The long carbon chain thiol is 1-dodecanethiol. The long carbon chain silane is octadecyltrimethoxysilane (OTMS). Other high molecular weight dispersants may be selected from polyamines, polyoxyethylene imides (POE-imides), polyoxyalkylene segmented amido acids (POA-segmented amido acids), polyoxyalkylene imides (POA-imides), polyacrylic acids, and multi-branched polyethylene glycols. The general formula of a polyamine is NH₃-(CH₂)ₐ-NH₃, NH₃-(CH₂)ₐ-(NH)ₘ-(CH₂)_{b}-NH₃ or NH₃-(CH₂)ₐ-(NH)ₘ-(CH₂)_{b}-(NH)ₙ-(CH₂)_{c}-NH₃, and so on. The general formula can be simplified to NH₃-(CH₂)ₓ-(NH)_{y}-NH₃, where x=a+b+c, y=m+n, and a, b, c, m, n, x, y are the numbers of corresponding chemical groups (such as CH₂ or NH) in the general formula. The multi-branched polyethylene glycol is selected from 4arm PEG, 3arm hydroxyl, 1arm amine, 4arm PEG, 3arm hydroxyl, 1arm amine, HCl Salt (pentaerythritol); 4arm PEG, 3arm methoxy, 1arm NHS ester; and 4arm PEG, 3arm hydroxyl, 1arm acetic acid. In particular, the side chains can utilize their functional groups to increase adsorption on the surfaces of the catalytic particles and utilize steric stabilization to increase dispersion stability. Optionally, the dispersant may further include/be added with polycarbonate serving as a second dispersant. The various dispersants mentioned above can all be applied to the sol-gel method or photodeposition method described below.

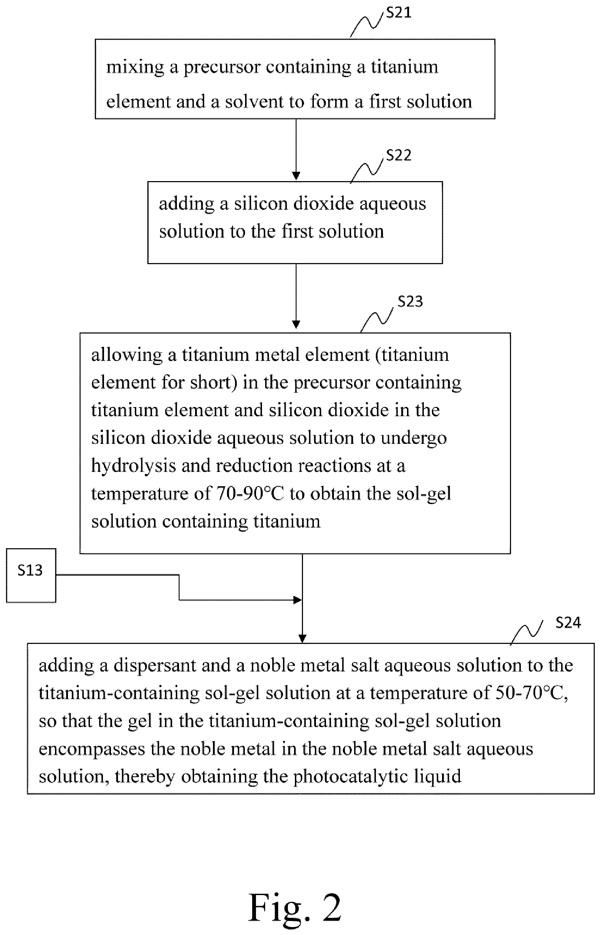

Fig. 2 is a flow chart showing a method for manufacturing a photocatalytic liquid (also referred to as a photocatalyst dispersion) using a sol-gel method according to another embodiment of the present invention. As shown in Fig. 2, a method for manufacturing a photocatalytic liquid is described. First, a titanium-containing sol-gel solution is formed, which includes the following steps: mixing a precursor containing a titanium element and a solvent to form a first solution (S21); adding a silicon dioxide aqueous solution to the first solution (S22); and allowing a titanium metal element (titanium element for short) in the precursor containing titanium element and silicon dioxide in the silicon dioxide aqueous solution to undergo hydrolysis and reduction reactions at a temperature of 70-90°C to obtain the sol-gel solution containing titanium (S23). Next, the photocatalytic liquid is formed, which includes the following step(s): adding a dispersant and a noble metal salt aqueous solution to the titanium-containing sol-gel solution at a temperature of 50-70°C, so that the gel in the titanium-containing sol-gel solution encompasses the noble metal in the noble metal salt aqueous solution, thereby obtaining the photocatalytic liquid (S24). Optionally, before Step S24, the method may further include a step: loading a metal, a rare earth metal oxide, silicon dioxide or a combination thereof onto the photocatalytic metal oxide (S13).

To build up a suitable liquid environment for the hydrolysis and reduction reactions to occur smoothly, preferably, the precursor containing the titanium element can be added with a solvent (for example, water, or liquid alcohol such as ethanol, ethylene glycol, isopropanol, glycerol, etc.) to form a first solution. The first solution may include 0.0147-88.75 wt.% of a precursor containing the titanium element and 11.25-99.9855 wt.% of a solvent. The first solution is stirred for about 1-2 hours. Afterwards, the silicon dioxide aqueous solution (or called the first second solution) is added so that the weight percentage of the silicon dioxide in the silicon dioxide aqueous solution (i.e., the first second solution) to the precursor containing the titanium element is between 1:1 and 100:1, and the solution is continuously stirred at a temperature of 70 to 90°C for a predetermined time (e.g., for about 8 to 10 hours) to enhance the hydrolysis and reduction reaction. Finally, the solution is allowed to stand (e.g., standing for about 12 to 15 hours) to obtain the sol-gel solution containing titanium.

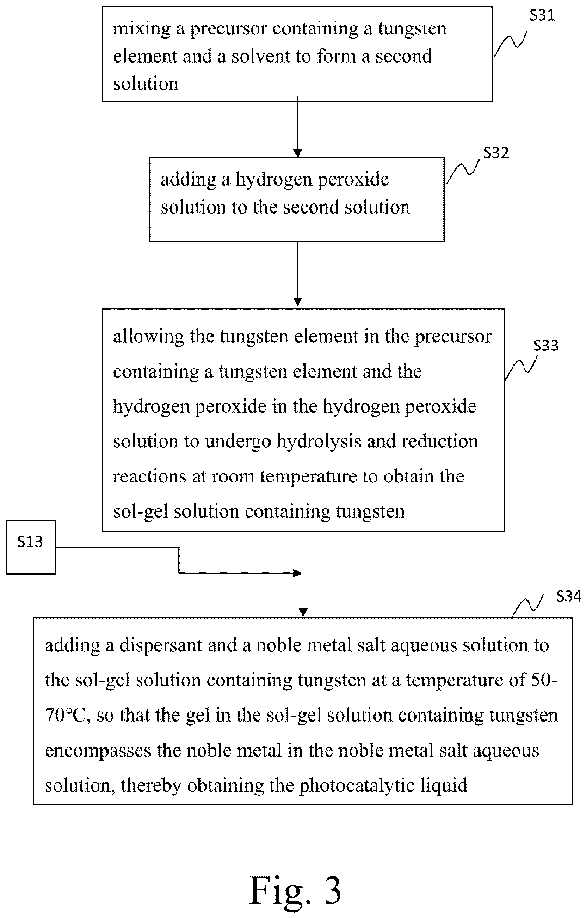

Fig. 3 is a flow chart showing a method for manufacturing a photocatalytic liquid using a sol-gel method according to another embodiment of the present invention. As shown in Fig. 3, a method for manufacturing a photocatalytic liquid is described. First, the steps of forming a sol-gel solution containing tungsten include: mixing a precursor containing a tungsten element and a solvent to form a second solution (S31); adding a hydrogen peroxide solution to the second solution (S32); and allowing the tungsten element in the precursor containing a tungsten element and the hydrogen peroxide in the hydrogen peroxide solution to undergo hydrolysis and reduction reactions at room temperature to obtain the sol-gel solution containing tungsten (S33). Next, the steps of forming the photocatalytic liquid include: adding a dispersant and a noble metal salt aqueous solution to the sol-gel solution containing tungsten at a temperature of 50-70°C, so that the gel in the sol-gel solution containing tungsten encompasses the noble metal in the noble metal salt aqueous solution, thereby obtaining the photocatalytic liquid (S34). Optionally, before Step S34, the method may further include a step: loading a metal, a rare earth metal oxide, silicon dioxide or a combination thereof onto the photocatalyst metal oxide (S13).

In Step S32, the tungsten element included in the precursor containing the tungsten element and the hydrogen peroxide included in the hydrogen peroxide solution undergo hydrolysis and reduction reactions to form a gel. After the colloidal particles in the gel are polymerized to form a gel with a structure having a three-dimensional spatial network, the sol-gel solution containg the tungsten is obtained.

To build up a suitable liquid environment for the hydrolysis and reduction reactions to occur smoothly, the precursor containing the tungsten element is added to a solvent (for example, water, or liquid alcohol such as ethanol, ethylene glycol, isopropanol, glycerol, etc.) to form a second solution. The second solution is stirred, and includes 0.3125-3.125 wt.% of the precursor containing the tungsten element and 96.875-99.6875 wt.% of the solvent. Then a hydrogen peroxide solution is added to the second solution to form a mixture. The weight ratio of the hydrogen peroxide solution to the precursor containing the tungsten element is between 0.5:1 and 5:1. The mixture is stirred at room temperature for a predetermined time (for example, for about 8 to 12 hours) to enhance the hydrolysis and condensation reactions. After the mixture is left to stand for about 24 to 48 hours, the sol-gel solution containing the tungsten element is obtained.

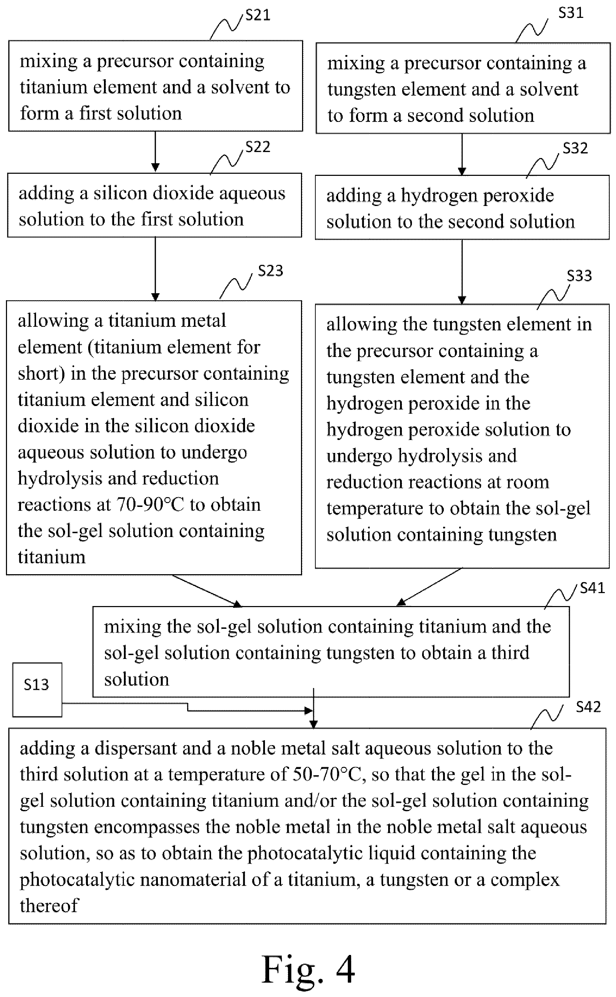

Fig. 4 is a flow chart showing a method for manufacturing a photocatalytic liquid using a sol-gel method according to another embodiment of the present invention. As shown in Fig. 4, a method for manufacturing a photocatalytic liquid is described. The method comprises the steps of either forming a sol-gel solution containing titanium or forming a sol-gel solution containing tungsten, respectively. The steps of forming sol-gel solution containing titanium comprises: mixing a precursor containing a titanium element with a solvent to form a first solution (S21); adding a first second solution containing a silicon dioxide into the first solution (S22); and causing the titanium element included in the precursor and a silicon oxide included in the first second solution to undergo hydrolysis and reduction reactions at a temperature of 70-90°C to obtain the sol-gel solution containing titanium (S23). The steps of forming the sol-gel solution containing tungsten comprises: mixing a precursor containing a tungsten element and a second solvent to form a second solution (S31); adding a hydrogen peroxide solution to the second solution (S32); and causing the tungsten element contained in the precursor containing a tungsten element and the hydrogen peroxide in the hydrogen peroxide solution to undergo hydrolysis and reduction reactions at room temperature to obtain the sol-gel solution containing tungsten (S33). Next, the steps further include: mixing the sol-gel solution containing titanium and the sol-gel solution containing tungsten to obtain a third solution (S41); and adding a dispersant and a noble metal salt aqueous solution to the third solution at a temperature of 50-70°C, so that the gel in the sol-gel solution containing titanium and/or the sol-gel solution containing tungsten encompasses the noble metal in the noble metal salt aqueous solution, so as to obtain the photocatalytic liquid containing the photocatalytic nanomaterial of a titanium, a tungsten or a complex thereof (S42). Optionally, the noble metal salt may further include a noble metal such as silver (Ag) nanoparticle, and so on. Alternatively, before Step S42 , the method may further comprise a step: loading a metal, a rare earth metal oxide, a silicon dioxide or a combination thereof onto the photocatalytic metal oxide (S13).

In Step S41 for obtaining the third mixture solution, the sol-gel solution containing titanium and the sol-gel solution containing tungsten are mixed (i.e., the sol-gel solution containing tungsten is added to the sol-gel solution containing titanium, or vise versa) to form a gel. After the colloidal particles in the gel are polymerized to form a gel with a structure having a three-dimensional spatial network, a sol-gel solution containing the titanium and the tungsten can be obtained.

In order to accelerate the hydrolysis and reduction reactions, in step S41, the pH value of the third mixture solution including the sol-gel solution containing titanium and the sol-gel solution containing tungsten can be adjusted to be neutral (for example, by adjusting the ratio of the sol-gel solution containing titanium to the sol-gel solution containing tungsten). Then, the third mixture solution is stirred at a temperature of 50-70°C for a predetermined time (e.g., about 3-5 hours) to enhance the hydrolysis and reduction reactions. After the third mixture solution is further allowed to stand (e.g., for about 8-12 hours), the sol-gel solution containing the titanium and tungsten is obtained accordingly.

In more detail, in Step S41, the the sol-gel solution containing titanium is slowly added to the sol-gel solution containing tungsten to obtain a third mixture solution with a pH value of 7.0, and then the third mixture solution is stirred at a temperature of 50-70°C for 4 hours (with a rotation speed between 800-1,000 rpm). Next, the third mixture solution is allowed to stand to gradually reduce the temperature to room temperature, the sol-gel solution containing the titanium and tungsten is obtained accordingly.

In each of Steps S24, S34 and S42, a dispersant and a noble metal salt aqueous solution are added to the sol-gel solution containing titanium and/or the sol-gel solution containing tungsten, so that the gel in the sol-gel solution containing titanium and/or the sol-gel solution containing tungsten can encompass the noble metal in the noble metal salt aqueous solution to obtain the photocatalytic liquid. The noble metal may at least include silver, for example, and may be one of silver, silver and platinum, silver and palladium, or silver and platinum and palladium. Preferably, the noble metal salt can be a nitrate or chloride of the noble metal, for example, silver nitrate (AgNO₃), silver chloride (AgCl), platinum nitrate (Pt(NO₃)₂), platinum tetrachloride (PtCl4), palladium nitrate (Pd(NO₃)₂) or palladium chloride (PdCl₂).

In order to shorten the time for the gel in the sol-gel solution containing titanium and the sol-gel solution containing tungsten to encompass the noble metal in the noble metal salt aqueous solution, the temperature is controlled in a range between 50 and 70°C. Continue to stir the solution at 50 to 70°C for a predetermined time (e.g., about 2 to 4 hours), and allow it to stand (e.g., about 5 to 8 hours) to obtain the photocatalytic liquid accordingly.

In one embodiment, silver nitrate is selected as the noble metal salt, and the noble metal salt is prepared into a noble metal salt aqueous solution with a concentration of 1M. The noble metal salt aqueous solution is then slowly added to the sol-gel solution containing titanium or tungsten to make the molar ratio of the noble metal (i.e., silver) in the noble metal salt to the titanium in the sol-gel solution containing titanium or tungsten be 1:100. The mixture is then stirred at a temperature of 50-70°C for 2-4 hours (with a rotation speed between 800 and 1,000 rpm), and then allowed to stand for 5 hours to obtain the photocatalytic liquid accordingly.

Optionally, in the steps of forming the sol-gel solution containing titanium or the sol-gel solution containing tungsten, other noble metal nanomaterial, such as at least one of platinum (Pt) nanoparticles and palladium (Pd) nanoparticles, can also be added thereinto to increase the combustion efficiency of the fuel; and/or a transition metal oxide, such as cerium dioxide (CeO₂) or manganese dioxide (MnO₂), can be added thereinto to increase the catalytic efficiency; and/or a non-noble metal oxide such as cuprous oxide (CuO) or copper peroxide (CuO₂) can be added thereinto to increase the demagnetization effect. The concentration of cerium dioxide or manganese dioxide in the phtocatalytic liquid is about 0.01 to 2.5 wt.%. If copper reduced from cuprous oxide is loaded on cerium dioxide, the concentration of the resultant copper/cerium dioxide in the photocatalytic liquid is about 0.5 wt.%, preferably.

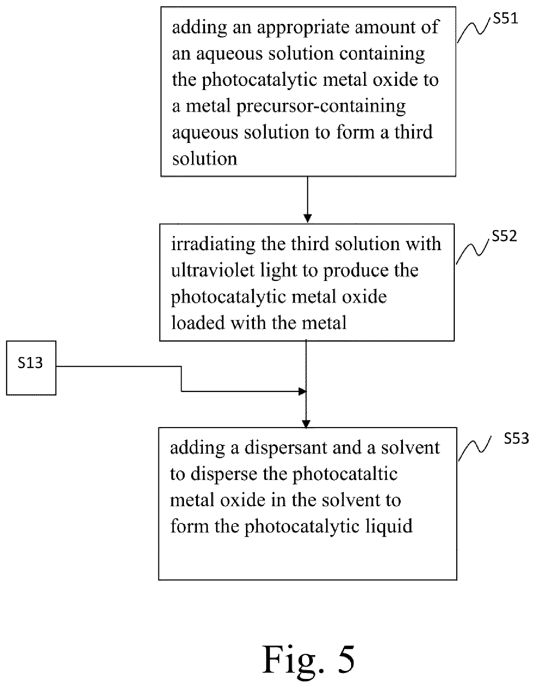

Fig. 5 is a flow chart showing a method for manufacturing a photocatalytic metal oxide using a photodeposition method according to another embodiment of the present invention. As shown in Fig. 5, the method comprises the following steps: adding an appropriate amount of an aqueous solution containing the photocatalytic metal oxide to a metal precursor-containing aqueous solution to form a third solution (S51); irradiating the third solution with ultraviolet light to produce the photocatalytic metal oxide loaded with the metal (S52); and adding a dispersant and a solvent to disperse the photocataltic metal oxide in the solvent to form the photocatalytic liquid (S53). Each of the metal, the photocatalytic metal oxide, the dispersant and the solvent can be selected from those described in the aforementioned method. Optionally, before Step S53, the method may further comprise a step: loading a metal, a rare earth metal oxide, silicon dioxide or a combination thereof onto the photocatalytic metal oxide (S13).

When the photocatalytic liquid according to the present invention is added to fuel and then burned, the photocatalytic nanomaterial (i.e., titanium, such as TiO₂; tungsten, such as WO₃; or both) included in the photocatalytic liquid can utilize the light (such as infrared light, visible light and/or ultraviolet light) generated by the combustion of the fuel to cause a photocatalytic reaction to occur, which can enhance the combustion of the fuel and make the combustion much more complete. Moreover, the photocatalytic liquid containing the noble metal nanoparticle (such as the silver nanoparticle and optionally further added with the palladium nanoparticle or platinum nanoparticle) can not only improve the performance of the photocatalytic nanomaterial, but also solve the disadvantage of the weak absorption of visible light to the photocatalytic nanomaterial. Therefore, the photocatalytic liquid according to the present invention can be used as a combustion promoter and utilize the light generated from the combustion reaction to decompose the water generated from the combustion reaction into hydrogen and oxygen, which can further anticipate the combustion reaction, thereby achieving the effect of increasing the combustion efficiency of the internal or external combustion engine and lowering the activation energy of the combustion reaction, so that the combustion can be more complete.

In the photocatalytic liquid, the extraordinary conductivity of the silver nanoparticle can increase the electron-hole binding rate and electron transmission of the photocatalytic nanomaterial, thereby improving the performance of the photocatalytic nanomaterial. It can also form a core-shell structure on the surface of the photocatalytic nanomaterial to improve the weak absorption of visible light by the photocatalytic nanomaterial (e.g., titanium dioxide), and increase the time to recombine the electrons excited by light from the conduction band and the holes on the band.

Moreover, in the photocatalytic liquid, the noble metal nanoparticle may further include a platinum nanoparticle, a palladium nanoparticle or a combination thereof. In addition to having the same properties as the silver nanoparticles, the platinum nanoparticle and the palladium nanoparticle can also reduce carbon monoxide (CO), hydrocarbons (HC), and nitrogen oxides (NOₓ) produced because of incomplete combustion of the fuel into carbon dioxide (CO₂) and nitrogen (N₂) respectively, thereby decreasing missions of exhaust gases and controlling air pollution.

In the photocatalytic liquid, the concentration of the noble metal silver nanoparticle can be in the range between 100 and 2,000 ppm (i.e., its weight percentage is 0.01 to 0.2 wt.%), preferably between 200 and 1,500 ppm (i.e., 0.02 to 0.15 wt.%), and more preferably between 500 and 1,000 ppm (i.e., 0.05 to 0.1 wt.%). Therefore, by providing a specific concentration range of the silver nano particle in the photocatalytic liquid, the photocatalytic performance of the photocatalyst nanomaterial can be effectively promoted while the cost of the incorporated noble metal can also be effectively controlled. In addition, experiments have shown that the noble metal nanoparticle having a concentration higher than 3,000 ppm will adhere to the surface of the photocatalytic nanomaterial, so as to reduce the specific surface area (as defined by Brunauer-Emmett-Teller Specific Surface Area, BET) of the photocatalytic nanomaterial and to reduce the photocatalytic activity of the photocatalytic nanomaterial.

In the photocatalytic liquid, the concentration of the platinum nanoparticle and/or the palladium nanoparticle, if present, can be in the range between 10 and 200 ppm (i.e., 0.001-0.02 wt.%) respectively. Experiments have shown that, by providing a specific concentration range of the platinum nanoparticle and/or the palladium nanoparticle in the photocatalytic liquid, the photocatalytic performance of the photocatalytic nanomaterial can be effectively promoted while the cost of the incorporated noble metal can be effectively controlled, and the substances in the exhaust emission resulting from incomplete combustion can be decreased.

In the photocatalytic liquid, the solvent can be selected from water or liquid alcohol, and the liquid alcohol can be selected from ethanol, ethylene glycol, isopropanol or glycerol. The solvent is preferably water, ethanol, isopropanol or glycerol, more preferably water. The solvent has an amount being the remaining proportion (i.e., the balance) of the photocatalytic liquid after deducting the amount of the other above-mentioned components. Experiments have shown that, by selecting the solvent, the dispersibility of the photocatalytic liquid can be increased by the polarity of the solvent itself. The dispersibility can be measured by a zeta potential analyzer, and the zeta potential of the photocatalytic liquid according to the present invention is greater than 20 mV, indicating good dispersibility.

In the following exemplary embodiments, unless otherwise specified, the photocatalytic liquid according to the present invention uses water as the solvent. Because water is a solvent that is readily available, has the lowest cost, and does not present any of the operational or hazardous issues associated with the handling of the organic solvent, it is most suitable for mass production of the photocatalytic liquid according to the present invention. Nevertheless, the aforementioned liquid alcohols are all suitable for the photocatalytic liquid of the present invention.

In the steps of forming the sol-gel solution containing titanium and/or the sol-gel solution containing tungsten according to the method for manufacturing the photocatalytic liquid of the present invention, the titanium element and silicon dioxide, or the tungsten element and hydrogen peroxide, are uniformly dispersed in a liquid environment, so that they are also uniformly mixed in the gel. By forming the sol-gel solution containing titanium and/or the sol-gel solution containing tungsten, the noble metal (e.g., silver) in the noble metal salt aqueous solution can be uniformly and quantitatively incorporated therein, so that the photocatalytic liquid obtained in this way is well dispersed. Therefore, when serving as a combustion promoter, for example, when added to the aforementioned fossil fuel, biomass fuel, or regenerated fuel, the light generated by the combustion of the fuel can be used to cause a photocatalytic reaction to occur, so as to increase the rate of the combustion and lower the activation energy of the combustion reaction, so that the combustion can be more complete, thereby achieving the effect of increasing the combustion efficiency of the internal or external combustion engine.

The photocatalytic liquid may further comprise silicon dioxide having a weight percentage in the range between 1 and 25 wt.% of the weight of the photocatalytic liquid. The heat resistance property of silicon dioxide can increase the thermal stability of the photocatalytic nanomaterial when subject to heat (such as burning in the combustion chamber of an internal or external combustion engine), and lower the energy required for the photocatalytic reaction to enhance the photocatalytic activity of the photocatalytic nanomaterial.

In the photocatalytic liquid according to the present invention, the precursor containing a titanium element can be selected from the group consisting of titanium hydroxide, titanium isopropoxide and titanium tetrachloride. Experiments have shown that, by selecting the precursor containing the titanium element, the particle size of the produced photocatalytic nanomaterial (i.e., titanium dioxide nanoparticles) can be effectively controlled to be no greater than 100 nm, thereby obtaining a photocatalytic nanomaterial with a large specific surface area and high activity.

In a preferred embodiment of the present invention, titanium hydroxide is selected as the precursor containing the titanium element, and water is selected as the solvent. Titanium hydroxide is added to water to form the first solution, which comprises 5 wt.% of titanium hydroxide and 95 wt.% of water) and is stirred at room temperature for 1 hour (the rotation speed is in the range between 800 and 1,000 rpm). Then, 1 M hydrogen peroxide (H₂O₂) is slowly added dropwise until the pH value of the first solution is in the range between 7 and 8, and stirred at room temperature at the same rotation speed for one hour. Next, the first solution is heated to a temperature between 70 and 90°C, and then the silicon dioxide aqueous solution (wherein the weight ratio of silicon dioxide to titanium hydroxide is 1:2) is slowly added, and the mixture is stirred for 10 hours at a temperature between 70 and 90°C. Then the mixture is allowed to stand for 12 hours to obtain the sol-gel solution containing titanium accordingly. In the photocatalytic liquid according to the present invention, the precursor containing the tungsten element can be selected from the group consisting of ammonium heptatungstate ((NH₄)₆W₇O₂₄), sodium tungstate (Na₂O₄W), tungsten hexachloride (WCl₆), and tungsten alkoxide (for example, ditungsten hexakis(tert-butoxide) (C₂₄H₅₄O₆W₂), etc.). Experiments have shown that, by selecting the precursor containing the tungsten element, the particle size of the produced photocatalytic nanomaterial (i.e., tungsten trioxide nanoparticles) can be effectively controlled to be no greater than 100 nm, thereby obtaining a photocatalytic nanomaterial with a large specific surface area and high activity.

In a preferred embodiment of the present invention, sodium tungstate is selected as the precursor containing the tungsten element, and water is selected as the solvent. Sodium tungstate is added to water to form the second solution, which comprises 3 wt.% of tungsten trioxide and 97 wt.% of water and is stirred at room temperature for 0.5 hours (the rotation speed is in the range between 800 and 1,000 rpm). Then, 1 M hydrochloric acid (HCl) is slowly added dropwise until the pH value of the second solution is about 6, and stirred at room temperature at the same rotation speed for 2 hours. Next, 1 M hydrogen peroxide is added at the weight ratio of hydrogen peroxide to tungsten trichloride being 1:2, and the mixture is stirred for 10 hours at room temperature and then allowed to stand for 24 hours to finally obtain the sol-gel solution containing tungsten.

As mentioned above, in the photocatalytic liquid, the solvent can be selected from water or liquid alcohol, and the liquid alcohol can be selected from ethanol, ethylene glycol, isopropanol or glycerol. The solvent is preferably water, ethanol, isopropanol or glycerol, more preferably water. Experiments have shown that by selecting the solvent, the dispersibility of the photocatalytic liquid can be increased by the polarity of the solvent itself. The dispersibility can be measured by Zeta Potential Analyzer, and the zeta potential of the photocatalytic liquid of the present invention is greater than 20 mV, indicating good disperibility.

In the photocatalytic liquid, the first solution may comprise 0.3625-8.875 wt.% of a precursor containing a titanium element and 91.125-99.6375 wt.% of a solvent. Accordingly, by means of the specific ratio of the precursor containing a titanium element and the solvent, the precursor containing the titanium element can be uniformly dispersed in the solvent, so as to enhance the efficiency of the hydrolysis and reduction reactions between the titanium element contained in the precursor containing the titanium element and the silicon dioxide contained in the silicon dioxide aqueous solution.

In the first solution, the weight ratio between the silicon dioxide in the silicon dioxide aqueous solution and the precursor containing the titanium element can be between 1:1 and 10:1. Accordingly, the efficiency of the hydrolysis and reduction reactions between the titanium element contained in the precursor containing the titanium element and the silicon dioxide contained in the silicon dioxide aqueous solution can be improved by the specific ratio of the silicon dioxide in the silicon dioxide aqueous solution to the titanium element contained in the precursor containing the titanium element.

In the photocatalytic liquid, the second solution may comprise 0.3125-3.125 wt.% of a precursor containing the tungsten element and 96.875-99.6875 wt.% of a solvent. Accordingly, by means of the specific ratio of the precursor containing the tungsten element and the solvent, the precursor containing the tungsten element can be uniformly dispersed in the solvent, so as to improve the efficiency of the hydrolysis and reduction reactions between the tungsten element contained in the precursor containing the tungsten element and the hydrogen peroxide contained in the hydrogen peroxide solution.

In the second solution, the weight ratio between the hydrogen peroxide solution and the precursor containing the tungsten element can be between 0.5:1 and 5:1. Accordingly, the efficiency of the hydrolysis and reduction reactions between the tungsten element contained in the precursor containing the tungsten element and the hydrogen peroxide contained in the hydrogen peroxide solution can be improved by the specific ratio of the hydrogen peroxide in the hydrogen peroxide solution to the tungsten element contained in the precursor containing the tungsten element.

According to an embodiment of the present invention, the method for synthesizing the photocatalytic material can adopt either a sol-gel method or a photodeposition method, which methods are described in detail as follows:

### (A) Sol-gel Method

The sol-gel method is a method in which a metal organic compound or a metal inorganic compound is subjected to a sol-gel process and a thermal process to form an oxide or other solid compound. In the following exemplary preparation methods, the transition metal oxide is a lanthanide metal oxide, particularly cerium dioxide, but not limited thereto.

A sol-gel method is used to prepare nano scale titanium dioxide or tungsten trioxide. In the following exemplary preparation methods, the nano scale photocatalytic metal oxide is titanium dioxide, but is not limited thereto.

The steps of preparing nano scale catalytic titanium dioxide by sol-gel method comprise:
(1) dissolving a titanium alkoxide (e.g., titanium n-butoxide or titanium isopropoxide) in ethanol or isopropanol to form a first solution;
(2) adding an appropriate amount of acid (such as HCl or HNO₃) as a catalyst;
(3) premixing an appropriate amount of distilled water and alcohol (such as ethanol) and then slowly dripping them into the first solution containing the titanium alkoxide and ethanol to hydrolyze the titanium alkoxide to form the titanium dioxide nanoparticles.

The prepared titanium dioxide nanoparticles are the nano scale photocatalytic metal oxide according to the present invention. As further described in Step S24, a dispersant and a solvent are added to obtain a photocatalytic liquid according to an embodiment of the present invention.

Alternatively, the steps of preparing the nano scale catalytic cerium dioxide by the sol-gel method comprise:
(1) reacting a cerium salt precursor (such as cerium nitrate or cerium oxalate) with citric acid in a molar ratio of 1:3 in a water bath at 65°C using a sol-gel method; and
(2) drying at 100-150°C for 0.5-2 hours and calcining at 500-700°C for 2 hours to obtain the nano scale catalytic cerium dioxide particles.

### (B) Photodeposition method

The photodeposition method utilizes ultraviolet light to excite the electron to jump across the energy gap of the photocatalyst material (such as WO₃ or TiO₂) so as to form electron-hole pairs on the surface of the photocatalytic material. By means of the electrons on the surface of the photocatalytic material, the metal ion is reduced. The reduced metal particle is deposited on the photocatalytic material, and a photocatalytic material loaded with the metal particle (or called the metal/photocatalytic material) is formed. The metal ion may be a noble metal ion (e.g., a silver ion) or a non-noble metal ion (e.g., a copper ion). According to an embodiment of the present invention, in the following exemplary preparation method, the photocatalytic material is tungsten trioxide and the metal is silver, but not limited thereto.

The steps of manufacturing the catalytic silver or tungsten trioxide by the photodeposition method comprise:
(1) adding an appropriate amount of silver nitrate aqueous solution (serving as a precursor of silver ion) into a reactor;
(2) adding an appropriate amount of tungsten trioxide suspension liquid into the reactor (so that the final concentration of silver particles on tungsten trioxide is 0.1-10 wt.%), oscillating them with an ultrasonic oscillator for 20 minutes to evenly mix the tungsten trioxide suspension liquid with the silver nitrate aqueous solution, and purging argon gas for 20 minutes to remove the air in the reactor; and
(3) irradiating the mixture in the reactor with ultraviolet light for 3 hours, subjecting the mixture to be filtered by vacuum and then drying at 60°C to obtain the catalytic silver or tungsten trioxide.

Optionally, after step (3), one of Step (4a) or (4b) is followed, wherein a surfactant with a long carbon chain (e.g., an ammonium salt with a long carbon chain, an oleylamine with a long carbon chain, sodium dodecyl sulfate (SDS), 1-dodecanethiol, or octadecyltrimethoxysilane (OTMS), or other high molecular weight dispersant mentioned above is used as a dispersant to modify the surface of the catalytic silver/tungsten trioxide to obtain a modified catalytic silver/tungsten trioxide, which can further increase the stability of the silver/tungsten trioxide dispersed in the solvent, wherein:
Step (4a) is a step for improving the hydrophilicity of the surface of tungsten oxide and includes: immersing the catalytic silver/tungsten trioxide in a nitric acid solution containing SDS, allowing to stand overnight, then filtering using vacuum, and drying at 60°C; or
Step (4b) is a step for improving the hydrophobicity of the surface of tungsten trioxide and includes: immersing the catalytic silver/tungsten trioxide in an ethanol solution containing 0.01 M 1-dodecanethio or a toluene solution containing 0.1 M OTMS, allowing to stand overnight, then being filtered using vacuum and drying at 60°C.

Alternatively, the catalytic titanium dioxide material can be further prepared into a catalytic silver/titanium dioxide or a catalytic copper/titanium dioxide. Taking the preparation of the catalytic silver/titanium dioxide as an example, the steps include:
(1) taking 100 grams of titanium dioxide and adding 25 liters of deionized water;
(2) irradiating with ultraviolet light for 10 minutes to remove impurities on the titanium dioxide surface;
(3) adding an appropriate amount of silver nitrate, adjusting the pH to 3.5 with perchloric acid, and adding 1 gram of sucrose as a sacrificial reagent;
(4) the generated holes from irradiation of UV light reacting with sucrose and the generated electrons reducing the silver ions in the silver nitrate so as to load the silver onto the surface of titanium dioxide particle;
(5) irradiating with UV light for 40 minutes under nitrogen purge; and
(6) filtering the suspension liquid and washing with water, and drying at 110°C for 12 hours to obtain a catalytic silver/titanium dioxide material.

In the step of manufacturing the catalytic silver/titanium dioxide, the silver nitrate in the aforementioned step can be replaced with copper nitrate, and so a catalytic copper/titanium dioxide material is obtained.

The above-mentioned manufacturing methods are suitable for manufacturing catalytic materials of various compositions in the photocatalytic liquid of the present invention. In addition, the manufacturing method of the present invention can adopt a wet type dispersion method (i.e., with using a solvent) as well as a dry dispersion method (i.e., without using a solvent). A common dispersion method such as ball mill grinding can also be applied to the present invention if required.

A combustion-promoting additive according to the present invention comprises 0.5-5% by weight of the photocatalytic liquid and 95-99.5 wt.% of a solvent (such as the liquid alcohol), wherein the photocatalytic liquid is the one as described above, or the one prepared by the manufacturing method of the photocatalytic liquid as described above.

Accordingly, by including the liquid alcohol, the combustion-promoting additive according to the present invention can increase its compatibility with fuel (e.g., the liquid alkane), thereby achieving the effect of increasing the combustion efficiency of an internal engine or an external combustion engine.

The photocatalytic liquid as described above can be atomized by heat and enter the intake manifold of the internal or external combustion engine along with the air. After entering the combustion chamber through the intake manifold, the atomized photocatalytic liquid by heat can be mixed to burn with fuel (e.g., gasoline, diesel, and natural gas, etc.) in the combustion chamber with a ratio that each milliliter of the photocatalytic liquid is supplied for 1,000-1,200 liters of diesel, for example. It is worth noting that the photocatalytic liquid can be used for an adjustable energy-saving equipment for an internal combustion engine, as set forth in Taiwan Patent Issuance No. M601280. After being heated to a preset working temperature by a heater, the photocatalytic liquid can be atomized and flow upward with the air, enter the intake manifold through an air outlet pipe, and then enter the combustion chamber through the intake manifold. The details can be easily understood by the skilled person in the art and therefor will not be described here.

Alternatively, the photocatalytic liquid described above can be mixed with a liquid alcohol (e.g., ethanol or isopropanol) to form a combustion-promoting additive together with the liquid alcohol, and then be mixed with fuel before being introduced into the combustion chamber together with a ratio that every 100 mlilliliters of the combustion-promoting additive are supplied for 50-80 L of gasoline, for example. For instance, the combustion-promotting additive may include 0.5-5 wt.% of the photocatalytic liquid and 95-99.5 wt.% of water or liquid alcohol.

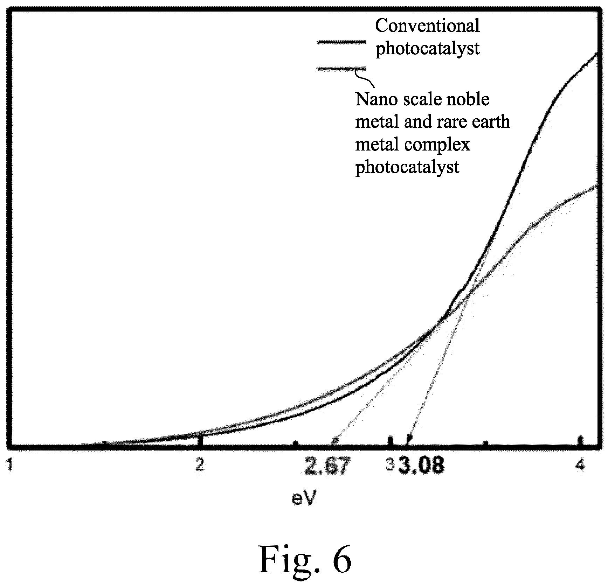

Fig. 6 is a Tauc plot showing the curves of the nano scale noble metal and rare earth composite photocatalyst according to the present invention and a conventional photocatalyst, wherein the nano scale noble metal and rare earth metal composite photocatalytic liquid according to the present invention includes silver as a noble metal, titanium dioxide as a photocatalyst, CeO2 as a rare earth oxide, 4arm PEG, 3arm hydroxyl, 1arm acetic acid as a dispersant, and water as a solvent, while the common photocatalytic liquid simply includes titanium dioxide as a photocatalyst, 4arm PEG, 3arm hydroxyl, 1arm acetic acid as a dispersant, and water as a solvent. As shown in Fig. 6, by extrapolation, the optical bandgap of the nano scale noble metal and rare earth metal composite in the photocatalytic liquid according to the present invention is 2.67 eV, while the optical bandgap of the conventional photocatalyst is 3.08 eV. It can be seen that the nano scale noble metal and rare earth metal composite in the photocatalytic liquid according to the present invention has a lower optical band gap than the conventional titanium dioxide photocatalyst, thereby increasing the photocatalytic efficiency.

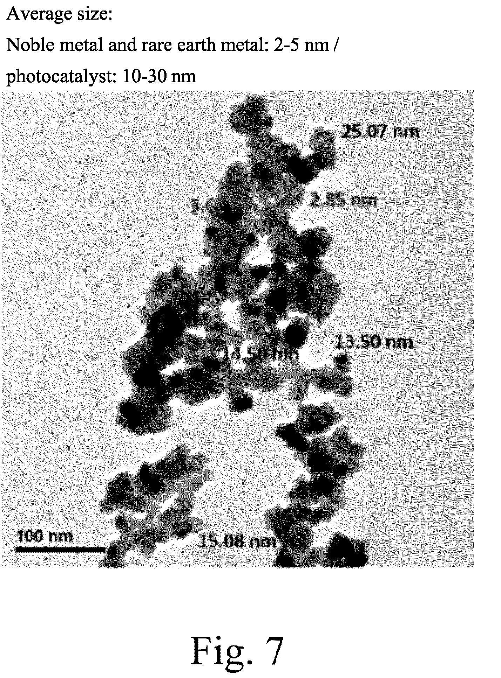

Fig. 7 is a SEM photograph showing both of the particle sizes of the nanoparticles including the noble metal and the rare earth metal composite and the particle sizes of the photocatalytic titanium dioxide in the photocatalytic liquid according to the present invention, wherein the noble metal and rare earth composite photocatalytic liquid include silver, cerium dioxide (CeO₂) and titanium dioxide (TiO₂), and the dispersant is 4arm PEG, 3arm hydroxyl and 1arm acetic acid. As shown in Fig. 7, in the nano scale noble metal and rare earth metal composite photocatalytic liquid, the particle sizes (diameters) of silver and cerium dioxide particles are measured to be 2.85 nm and 3.65 nm, which are roughly within the range from 2 to 5 nm. The particle sizes of the photocatalytic titanium dioxide particles are measured to be 13.50 nm, 14.50 nm, 15.08 nm and 25.07 nm, roughly within the range from 10 to 30 nm. It can be understood that the photocatalytic materials of the present invention are well dispersed in the photocatalytic liquid and are not easy to agglomerate.

The photocatalytic liquid according to the present invention can have the properties similar to those shown in Figs. 6 and 7 by using the different recipes/compositions as described above.

In order to prove that the photocatalytic liquid as described above, for example including silicon dioxide, titanium dioxide, and silver and platinum, can indeed improve the combustion efficiency of an internal or external combustion engine, the photocatalytic liquid is heated and atomized, and then enters the combustion chamber of an internal or external combustion engine with the air to mix with fuel. The combustion efficiency of the fuel for each engine installed with the energy-saving equipment is shown in Table 1 as follows.

**Table 1: Average fuel saving efficiency on gasoline and diesel engines**

| Engine of Vehicle /Boiler /Generator | Energy-Saving Equipment installed | Consumption Ratio of Fuel/Air before installation (L/100 km) | Consumption Ratio of Fuel/Air after installation (L/100 km) | Percentage Saved (%) |
|---|---|---|---|---|
| Toyota Altis, 1.8 L, sedan | ECO-0 | 4.8 | 3.8 | 20.8 |
| KIA Cerato, 1.6 L, rental car | ECO-0 | 8.4 | 7.2 | 14.3 |
| JAC Refine, 2.4 L, light duty vehicle | ECO-0 | 12.5 | 10.5 | 16 |
| Volkswagen Jetta, 1.5 L, sedan | ECO-0 | 8.1 | 6.9 | 14.8 |
| JAC Refine, 1.6 L, light duty vehicle | ECO-0 | 8.3 | 7.1 | 14.5 |
| Wuling Hongguang, 1.5 L, light duty vehicle | ECO-0 | 9.0 | 7.2 | 20.0 |
| Toyota Corolla, 1.6 L, rental car | ECO-0 | 8.5 | 7.0 | 17.6 |
| Volkswagen Santana, 1.6 L, rental car | ECO-0 | 7.8 | 7.0 | 10.3 |
| Xiali V5, 1.5 L, rental car | ECO-0 | 7.2 | 5.9 | 18.0 |
| Xiali V5, 1.5, rental car | ECO-0 | 7.7 | 6.5 | 15.6 |
| Xiali Vizi V5, 1.5 L, rental car | ECO-0 | 7.2 | 6.2 | 13.9 |
| Shaanxi Auto DeLong M3000, 375 hp, diesel heavy truck | ECO-0 | 35.0 | 31.0 | 11.4 |
| Shaanxi Auto DeLong M3000, 400 hp, diesel heavy truck | ECO-0 | 38.2 | 35.0 | 8.4 |
| Shaanxi Auto DeLong M3000, 400 hp, diesel heavy truck | ECO-0 | 34.5 | 31.6 | 8.2 |
| Shaanxi Auto DeLong M3000, 460 hp, diesel heavy truck | ECO-0 | 35.1 | 31.1 | 11.4 |
| Jiefang Auto JH6, 550 hp, diesel heavy truck | ECO-0 | 40.2 | 35.5 | 11.7 |
| CNHTC SITRAK, 440 hp, diesel heavy truck | ECO-0 | 39.8 | 37.5 | 5.8 |
| Dongfeng Chenglong M5, 375 hp, diesel heavy truck | ECO-0 | 31.6 | 28.0 | 11.4 |
| Mercedes-Benz, 440hp, diesel heavy truck | ECO-0 | 35.1 | 32.2 | 8.3 |
| Scania P340, 340hp, diesel heavy truck | ECO-0 | 29.1 | 26.5 | 8.9 |
| Ningbo Bus Ningtong, 375 hp, diesel bus | ECO-0 | 38.9 | 35.1 | 9.8 |
| Xinjiang Heishan Tonly Heavy Industries, 430 hp, coal mine truck | ECO-0 | 225 | 193 | 14.2 |
| Kaohsiung Chikuo Ferry 1 | ECO-0 | Fuel consumption per hour: 58.8L | Fuel consumption per hour: 54.6L | 7.1 |
| Hong Kong Star Ferry 1 | ECO-0 | Fuel consumption per hour: 46.3L | Fuel consumption per hour: 42.8L | 7.6 |
| Keelung CT3 lighted fishing boat | ECO-0 | Fuel consumption per hour: 60.8L | Fuel consumption per hour: 55.8L | 8.2 |
| Kaohsiung 3.5tons gas-fired boiler | ECO-0 | Time required for water vapor pressure increased from 0 to 7kg: 554 sec. | Time required for water vapor pressure increased from 0 to 7kg: 519 sec. | 6.8 |
| Tienjin 1 ton, gas-fired boiler | ECO-0 | Time required for water vapor pressure increased from 0 to 7kg: 978 sec. | Time required for water vapor pressure increased from 0 to 7kg: 893 sec. | 8.7 |
| Yuchai 300kw diesel generator | ECO-0 | Fuel consumption per hour: 80.8L | Fuel consumption per hour: 74.9L | 7.4 |
| Yuchai 200kw diesel generator | ECO-0 | Fuel consumption per hour: 55.1L | Fuel consumption per hour: 50.5L | 8.3 |

As shown in Table 1, after the photocatalytic liquid is heated and atomized by the adjustable energy-saving equipment for an internal combustion engine (i.e., ECO-0) as described in Taiwan Patent Issuance No. M601280, the average fuel saving rate for a gasoline or diesel engine can reach 5.8-20.8%, the steam pressure rise time for a steam boiler can be saved by 6.8-8.7%, and the average fuel saving rate can reach 7.42-8.3% for a diesel generator.

In addition, if the photocatalytic liquid is heated, atomized and then enters the combustion chamber of an external combustion engine along with the air to mix with fuel in the combustion chamber, the air saving rate for a 0.5 ton gas-fired boiler can reach 6-10%.

Furthermore, if the photocatalytic liquid is mixed with a liquid alcohol as a diluent to form the combustion-promoting additive, and then the combustion-promoting additive is mixed with fuel before being introduced into the combustion chamber of the internal combustion engine together, the fuel saving rate for a gasoline engine can reach 5-10%.

If the solvent in the photocatalytic liquid is water, ethanol, ethylene glycol, glycerol or isopropanol, the service life of the photocatalytic liquid can exceed two years without having obvious agglomeration or precipitation.

### Emission of exhaust gas and fuel consumption test

A combustion test for a diesel engine was performed to measure the exhaust gas concentration by comparing the presence and absence of the photocatalytic liquid according to the present invention. The test conditions of photocatalytic liquid are as follows:
the photocatalytic liquid: prepared by the photodeposition method (product code: ECO serie environmental protection and energy saving system);
test condition: normal operation, burning for 30 minutes;
test engine: YANMAR 6EY22AW four-stroke 1000 hps diesel engine;
power output: 25%; and
exhaust gas analyzer: ECOM-J2K^{pro}.

The test data is shown in Table 2 below.

**Table 2: Test Data of Exhaust Gas and Fuel Consumption**

| Gas inspected / fuel consumption | Fuel without the photocatalytic liquid (WO) | Fuel added to the photocatalytic liquid (W) | Percentage of change (W-WO)/WO |
|---|---|---|---|
| carbon monoxide (CO) | 154 ppm | 135 ppm | -12.3% |
| carbon dioxide (CO₂) | 3.36% | 2.78% | -0.58% |
| nitrogen oxides (NOₓ) | 2520 ppm | 1930 ppm | -23.4% |
| oxygen (O₂) | 16.71% | 17.15% | +0.44% |
| gasoline consumption per hour (L/hr.) | 49.8 | 46.4 | -6.8% |

It can be understood from the test data in Table 2 that the addition of the photocatalytic liquid according to the present invention can significantly reduce the emission of exhaust gas, and the concentration of oxygen emission increases, indicating that the amount of oxygen required for combustion is reduced, which can prove that the fuel burns more completely. In addition, fuel consumption is also saved by 6.8%. Thus, the usage of the photocatalytic liquid of the present invention can further reduce the amount of emission of the exhaust gas and save energy.

### Cooling Test for Green Building Material

In order to prove that the photocatalytic liquid according to the present invention has a cooling effect on the exterior wall formed on a green building, the photocatalytic liquid P-701 of the present invention, which includes silver, cerium dioxide, titanium dioxide, and the dispersant being 4arm PEG, 3arm hydroxyl, 1arm amine, hydrochlorate (pentaerythritol), is applied onto the exterior wall of the building. The application of the photocatalytic liquid is described below.

The surface of the exterior wall to be applied is pretreated to remove debris, dust, and loose materials attached thereon. First, apply a spot coating using the photocatalytic liquid onto the cracks on the wall and/or the joints between the new and old walls three times. In the first time of coating, the raw liquid P-701 is diluted by 1 to 2 times of water and is applied on the wall surface for a penetration treatment so as to allow the diluted liquid to penetrate into the pores to enhance the adhesion effect. After drying, the raw liquid P-701 is further applied (i.e., the second time of coating), and optionally the glass fiber mesh can be stuck thereon to achieve the anti-cracking effect. After drying, the raw liquid is applied again (i.e., the third time of coating) to enhance the waterproof effect. During each coating application of the raw liquid, 30 minutes will be needed to wait for the surface to dry.

After the penetration treatment is done, a coating application of the raw liquid on the whole wall surface is required at least twice to three times more, i.e., the fourth, the fifth and the sixth times of coating. In the fourth time of coating, the raw liquid can be diluted by water in an appropriate amount, depending on the material of the wall surface. For example, a solution including 0-10% water and a balance of the raw liquid is applied on the wall surface to facilitate a coating as a primer. In each of the fifth and sixth times of coating, the raw liquid is applied. The inverval between two coatings is about 30 minutes for drying, and each coating thickness depends on the needs, basically not exceeding 0.5 mm.

After testing, the measured indoor temperature can be reduced by about 2-4°C by comparing the indoor temperature before and after the coating application. Based on the extent of cooling, it is estimated that the power consumption for the air conditioning can be reduced by 10-20%. Therefore, it can be understood that the usage of the photocatalytic liquid according to the present invention can promote the spontaneous cooling of the building materials. Accordingly, by causing the indoor temperature to drop, the effect of saving energy and reducing carbon emissions can be achieved.

Based on the above, the photocatalytic liquid according to the present invention, by means of the photocatalytic nanomaterial included therein, can utilize the light (including infrared light, visible light, and/or ultraviolet light) generated from fuel combustion to activate a photocatalytic reaction during the combustion, thereby promoting the combustion and making the combustion more complete. Furthermore, by means of the noble metal nanoparticles included therein, not only the performance of the photocatalytic nanomaterial can be improved, but also the disadvantage of the weak absorption of visible light to the photocatalytic nanomaterial is overcome. Therefore, the photocatalytic liquid can be used as a combustion promoter to utilize the light source generated by the combustion reaction to decompose the water generated by the combustion reaction into hydrogen and oxygen, which can be further used for enhancing the combustion reaction, thereby achieving the effect of increasing the combustion efficiency of an internal or external combustion engine.

Furthermore, by adding a proper dispersant thereto, in the photocatalytic liquid according to the present invention, the photocatalytic nanomaterial included in the photocatalytic liquid is effectively dispersed, thereby preventing the photocatalytic nanomaterial from agglomerating and precipitating, so as to ensure the concentration of the effective photocatalytic nanomaterial dispersed in the photocatalytic liquid and extend the service life of the photocatalytic liquid without reducing the combustion efficiency.

Furthermore, by forming the sol-gel solution containing titanium or the sol-gel solution containing tungsten, the method of manufacturing the photocatalytic liquid provided by the present invention causes the titanium (or the tungsten) and silicon dioxide to be uniformly dispersed in the liquid environment, so that they can also be uniformly mixed when forming the gel. By forming the sol-gel solution containing titanium or tungsten, the noble metal (e.g., silver) in the noble metal salt aqueous solution can be uniformly and quantitatively incorporated therein, so that the photocatalytic liquid obtained has good dispersibility. Therefore, when serving as a combustion promoter, the photocatalytic liquid can achieve the effect of increasing the combustion efficiency of an internal or external combustion engine.

In addition, the combustion-promoting additive according to the present invention can increase its compatibility with fuel (for example, the aforementioned fossil fuel, biomass fuel, or regenerated fuel) by containing liquid alcohol serving as a solvent, thereby achieving the effect of increasing the combustion efficiency of an internal or external combustion engine.

Furthermore, the photocatalytic liquid according to the present invention is not prone to agglomeration or precipitation, and has good dispersibility. Therefore, the combustion-promoting additive added with the photocatalytic liquid of the present invention has a longer service life and is more stable.

In addition, the photocatalytic liquid according to the present invention can be applied to a green building or a green automotive material (such as a thermal insulation material for automotive glass), and has good effects on building heat dissipation, car cooling, or removing pollutants generated in the indoor or outdoor environment.

Based on the above content, it can be understood that the photocatalytic liquid according to the present invention not only has a relatively long service life, but also has good functions for various different applications. Moreover, in these wide applications, especially in the issues of environmental protection (including reducing fuel consumption, reducing exhaust emissions, cooling, and removing pollutants), it has been verified that the photocatalytic liquid can achieve special effects that prior technique cannot achieve.

## Claims

1. A method for manufacturing a photocatalytic liquid, the method **characterized by** comprising:
- providing a photocatalytic metal precursor comprising one of a titanium ion, a tungsten ion, and a combination thereof;
- forming a photocatalytic metal oxide from the photocatalytic metal precursor using one of a sol-gel method and a photo-deposition method; and
- adding a dispersant and a solvent to disperse the photocatalytic metal oxide in the solvent, so as to obtain the photocatalytic liquid.

2. The method as claimed in Claim 1, before the step of adding the dispersant and the solvent, **characterized by** further comprising a step:
- loading one selected from a group consisting of a metal, a rare earth metal oxide, a silicon dioxide and a combination thereof onto the photocatalytic metal oxide.

3. The method as claimed in Claim 2, **characterized in that** the metal is one of silver and copper, and the rare earth metal oxide is cerium oxide.

4. The method as claimed in any of Claims 1-3, **characterized in that** the dispersant is one selected from a group consisting of a long carbon chain ammonium salt, a long carbon chain oleylamine, a long carbon chain thiol, a long carbon chain silane, a long carbon chain sodium sulfate, a high molecular weight dispersant and a combination thereof.

5. The method as claimed in any of Claims 1-4, **characterized in that** the dispersant added is in 0.01-5wt.% in the photocatalyst liquid.

6. The method as claimed in any of Claims 1-4, **characterized in that** the long carbon chain ammonium salt is ammonium polyacrylate (NH4PAA), the long carbon chain oleylamine is oleylamine, the long carbon chain thiol is 1-dodecanethio, the long carbon chain silane is octadecyl trimethoxy silane (OTMS), the long carbon chain sodium sulfate is sodium dodecyl sulfate (SDS), and the high molecular weight dispersant is one selected from a group consisting of polyamine, polyoxyethylene imide, polyoxyalkylene segment-amide, polyoxyalkylene imide and a combination thereof.

7. The method as claimed in Claim 1, **characterized in that** the solvent is one selected from a group consisting of water, ethanol, isopropanol, glycerol, ethylene glycol and a combination thereof.

8. The method as claimed in any of Claims 1-7, **characterized in that**:
(1)the sol-gel method comprises forming a sol-gel solution containing one of the titanium and the tungsten, wherein:
- the step of forming in a first instance of the sol-gel solution containing the titanium comprises the following steps:
- mixing a precursor containing a titanium element and a first solvent to form a first solution;
- adding a silicon dioxide-containing aqueous solution into the first solution; and
- causing the titanium element contained in the precursor containing the titanium element and a silicon oxide contained in the silicon oxide-containing aqueous solution to undergo hydrolysis and reduction reactions to obtain the sol-gel solution containing the titanium at a temperature between 70 to 90°C; and
- the step of forming in a second instance of the sol-gel solution containing the tungsten comprises:
- mixing a precursor containing the tungsten element and a second solvent to form a second solution;
- adding a hydrogen peroxide solution into the second solution; and
- causing the tungsten element contained in the precursor and the hydrogen peroxide solution to undergo hydrolysis and reduction reactions to obtain the sol-gel solution containing the tungsten at room temperature; and
(2)the photo-deposition method comprises the following steps:
- adding an aqueous solution containing the photocatalytic metal oxide into a metal precursor-containing aqueous solution to form a third solution; and
- irradiating the third solution with ultraviolet light for 3 hours and then drying the third solution to produce the photocatalytic metal oxide loaded with the metal.

9. he method as claimed in Claim 8, **characterized in that** one of the first solvent and the second solvent is one selected from a group consisting of water, ethanol, isopropanol, glycerol, ethylene glycol and a combination thereof.

10. The method as claimed in any of Claims 1-9, **characterized in that** the photocatalytic liquid comprises a catalytic metal oxide and a metal, a catalytic metal ion included in the catalytic metal oxide comprises one selected from a group consisting of a titanium ion, a tungsten ion and a combination thereof, and the metal is one of silver, copper and a combination thereof.

11. A photocatalytic liquid, **characterized by** comprising:
- a noble metal nanoparticle being in a weight percentage of 0.01-0.2 wt.% of the photocatalytic liquid, and including a silver nanoparticle;
- a photocatalytic nanomaterial being in a weight percentage of 0.01-25 wt.% of the photocatalytic liquid, and including at least one of a titanium nanoparticle and a tungsten trioxide nanoparticle;
- a dispersant in a weight percentage of 0.01-5 wt.% of the photocatalytic liquid; and a balance of a solvent.

12. The photocatalytic fluid as claimed in Claim 11, **characterized by** further comprising at least one of a silicon dioxide, a transition metal oxide, and a copper-containing oxide, wherein the silicon dioxide is in a weight percentage of 1-25 wt.% of the photocatalytic liquid, the transition metal oxide is in a weight percentage of 0.001-0.02 wt.% of the photocatalytic liquid, the copper-containing oxide is in a weight percentage of 0.001-0.02 wt.% of the photocatalytic liquid, the transition metal oxide is one of a cerium dioxide and a manganese dioxide, and the copper-containing oxide is one of a cuprous oxide and a copper peroxide.

13. The photocatalytic liquid as claimed in Claim 11 or 12, **characterized in that** the noble metal nanoparticle further comprises one of a platinum nanoparticle, a palladium nanoparticle, and a combination thereof, and if any one of the platinum nanoparticle and the palladium nanoparticle is present, the present one is in a weight percentage of 0.001-0.02 wt.% of the photocatalytic liquid, and the dispersant is one selected from a group consisting of a long carbon chain ammonium salt, a long carbon chain oleylamine, a long carbon chain thiol, a long carbon chain silane, a long carbon chain sodium sulfate, a high molecule weight dispersant and a combination thereof.

14. The photocatalytic liquid as claimed in Claim 13, **characterized in that** the long carbon chain ammonium salt is ammonium polyacrylate (NH₄PAA), the long carbon chain oleylamine is oleylamine, the long carbon chain thiol is 1-dodecanethio, the long carbon chain silane is octadecyl trimethoxy silane (OTMS), the long carbon chain sodium sulfate is sodium dodecyl sulfate (SDS), and the high molecular weight dispersant is one selected from a group consisting of polyamine, polyoxyethylene imide (POE-imide), polyoxyalkylene segment-amide (POA-segmented amido acid), polyoxyalkylene imide (POA-imide), polyacrylic acid, multi-branched polyethylene glycol and a combination thereof, and the solvent is one selected from a group consisting of water, ethanol, isopropanol, glycerol, ethylene glycol and a combination thereof.

15. The photocatalytic liquid as claimed in Claim 11 or 14, **characterized in that** the solvent is water.

## Amended claims

### Amended claims in accordance with Rule 137(2) EPC.

1. A method for manufacturing a photocatalytic liquid, the method **characterized by** comprising:
- providing a photocatalytic metal precursor comprising one of a titanium ion, a tungsten ion, and a combination thereof;
- forming a photocatalytic metal oxide from the photocatalytic metal precursor using one of a sol-gel method and a photo-deposition method; and
- adding a dispersant and a solvent to disperse the photocatalytic metal oxide in the solvent, so as to obtain the photocatalytic liquid,
wherein
- the dispersant is one selected from ammonium polyacrylate (NH₄PAA), oleylamine (C₁₈H₃₅NH₂), 1-dodecanethio, octadecyl trimethoxy silane (OTMS), sodium dodecyl sulfate (SDS), a high molecule weight dispersant, and a combination, wherein the high molecule weight dispersant is one selected from a group consisting of polyamine, polyoxyethylene imide, polyoxyalkylene segment-amide, polyoxyalkylene imide, and a combination thereof; and
- the solvent is one selected from a group consisting of water, ethanol, isopropanol, glycerol, ethylene glycol and a combination thereof.

2. The method as claimed in Claim 1, before the step of adding the dispersant and the solvent, **characterized by** further comprising a step:
- loading one selected from a group consisting of a metal, a rare earth metal oxide, a silicon dioxide and a combination thereof onto the photocatalytic metal oxide.

3. The method as claimed in Claim 2, **characterized in that** the metal is one of silver and copper, and the rare earth metal oxide is cerium oxide.

4. The method as claimed in any of Claims 1-3, **characterized in that**, in the photocatalytic liquid:
- the metal is in a weight percentage of 0.01-0.2 wt.% of the photocatalytic liquid
- the photocatalytic metal oxide is in a weight percentage of 0.01-25 wt.% of the photocatalytic liquid, and includes at least one of a titanium nanoparticle and a tungsten trioxide nanoparticle;
- the dispersant is in a weight percentage of 0.01-5 wt.% of the photocatalytic liquid; and
- a balance is a solvent.

5. The method as claimed in any of Claims 1-4, **characterized in that** the dispersant added is in 0.01-5wt.% in the photocatalyst liquid.

6. The method as claimed in Claim 1, **characterized in that** the solvent is one selected from a group consisting of water, ethanol, isopropanol, glycerol, ethylene glycol and a combination thereof.

7. The method as claimed in Claim 2, **characterized in that**:
(1)the sol-gel method comprises forming a sol-gel solution containing one of the titanium and the tungsten, wherein:
- the step of forming in a first instance of the sol-gel solution containing the titanium comprises the following steps:
- mixing a precursor containing a titanium element and a first solvent to form a first solution;
- adding a silicon dioxide-containing aqueous solution into the first solution; and
- causing the titanium element contained in the precursor containing the titanium element in the first solution with the silicon oxide-containing aqueous solution to undergo hydrolysis and reduction reactions to obtain the sol-gel solution containing the titanium at a temperature between 70 to 90°C; and
- the step of forming in a second instance of the sol-gel solution containing the tungsten comprises:
- mixing a precursor containing the tungsten element and a second solvent to form a second solution;
- adding a hydrogen peroxide solution into the second solution; and
- causing the tungsten element contained in the precursor and the hydrogen peroxide solution to undergo hydrolysis and reduction reactions to obtain the sol-gel solution containing the tungsten at room temperature; and
(2)the photo-deposition method comprises the following steps:
- adding an aqueous solution containing the photocatalytic metal oxide into a metal precursor-containing aqueous solution associated with the metal to form a third solution; and
- irradiating the third solution with ultraviolet light for 3 hours and then drying the third solution to produce the photocatalytic metal oxide loaded with the metal.

8. The method as claimed in Claim 7, **characterized in that** one of the first solvent and the second solvent is one selected from a group consisting of water, ethanol, isopropanol, glycerol, ethylene glycol and a combination thereof.

9. The method as claimed in Claim 2, **characterized in that** the photocatalytic liquid comprises a catalytic metal oxide and a metal, a catalytic metal ion included in the catalytic metal oxide comprises one selected from a group consisting of a titanium ion, a tungsten ion and a combination thereof, and the metal is one of silver, copper and a combination thereof.

10. A photocatalytic liquid, **characterized by** comprising:
- a noble metal nanoparticle being in a weight percentage of 0.01-0.2 wt.% of the photocatalytic liquid, and including a silver nanoparticle; and
- a photocatalytic nanomaterial being in a weight percentage of 0.01-25 wt.% of the photocatalytic liquid, and including at least one of a titanium nanoparticle and a tungsten trioxide nanoparticle;
- a dispersant in a weight percentage of 0.01-5 wt.% of the photocatalytic liquid; and
- a balance of a solvent,
wherein:
- the dispersant is one selected from a group consisting of ammonium polyacrylate (NH₄PAA), oleylamine (C₁₈H₃₅NH₂), 1-dodecanethio, octadecyl trimethoxy silane (OTMS), sodium dodecyl sulfate (SDS), a high molecule weight dispersant, and a combination thereof, wherein the high molecule weight dispersant is one selected from a group consisting of polyamine, polyoxyethylene imide, polyoxyalkylene segment-amide, polyoxyalkylene imide, and a combination thereof; and
- the solvent is one selected from a group consisting of water, ethanol, isopropanol, glycerol, ethylene glycol and a combination thereof.

11. The photocatalytic fluid as claimed in Claim 10, **characterized by** further comprising at least one of a silicon dioxide, a transition metal oxide, and a copper-containing oxide, wherein the silicon dioxide is in a weight percentage of 1-25 wt.% of the photocatalytic liquid, the transition metal oxide is in a weight percentage of 0.001-0.02 wt.% of the photocatalytic liquid, the copper-containing oxide is in a weight percentage of 0.001-0.02 wt.% of the photocatalytic liquid, the transition metal oxide is one of a cerium dioxide and a manganese dioxide, and the copper-containing oxide is a cuprous oxide.

12. The photocatalytic liquid as claimed in Claim 10 or 11, **characterized in that** the noble metal nanoparticle further comprises one of a platinum nanoparticle, a palladium nanoparticle, and a combination thereof, and if any one of the platinum nanoparticle and the palladium nanoparticle is present, the present one is in a weight percentage of 0.001-0.02 wt.% of the photocatalytic liquid.

13. The photocatalytic liquid as claimed in any one of Claims 10 to 12, **characterized in that** the solvent is water.
